# FASCICULE DE BREVET EUROPEEN

(11) **EP 4 072 902 B1**
(45) Date de publication et mention de la délivrance du brevet: **19.08.2026**
(21) Numéro de dépôt: 20812069.1
(22) Date de dépôt: 30.11.2020
(51) Int. Cl.: B60Q 1/00, B60Q 1/04, F21S 41/20, F21S 41/29, F21S 41/30, F21S 41/50, B60R 19/50, B60R 13/00

(54) **ENSEMBLE LUMINEUX D'UN VÉHICULE**
FAHRZEUGLICHTEINHEIT
VEHICLE LIGHT UNIT

(30) Priorité: 10.12.2019 FR 1914012
(43) Date de publication de la demande: 19.10.2022
(73) Titulaire: Valeo Vision, 93012 Bobigny Cedex (FR)
(72) Inventeur: DANIEL, Thomas, 93012 Bobigny Cedex (FR)
(74) Mandataire: Valeo Visibility
(86) Numéro de dépôt international: PCT/EP2020/083961
(87) Numéro de publication internationale: WO 2021/115828

(56) Documents cités:
- EP-A1- 2 899 068
- EP-A1- 3 069 966
- EP-A2- 1 270 319
- WO-A1-2015/001823
- DE-A1- 102014 110 348
- FR-A1- 3 040 667
- GB-A- 2 451 125
- US-A1- 2013 314 935

## Description

La présente invention se rapporte à un ensemble lumineux d'un véhicule. Elle trouve une application particulière mais non limitative dans les véhicules automobiles.

Les documents EP 1 270 319 A2, GB 2 451 125 A, DE 10 2014 110348 A1 et EP 3 069 966 A1 illustrent les connaissances de l'homme du métier.

Dans le domaine des véhicules automobiles, un ensemble lumineux d'un véhicule connu de l'homme du métier comprend deux projecteurs et un bandeau sur les projecteurs du véhicule de sorte à obtenir un aspect visuel d'une seule pièce. Pour former le bandeau, trois pièces sont utilisées.

Un inconvénient de cet état de la technique est d'ajuster correctement les trois pièces ensemble en prenant en compte les jeux mécaniques.

Dans ce contexte, la présente invention vise à proposer un ensemble lumineux d'un véhicule qui permet de résoudre l'inconvénient mentionné.

A cet effet, l'invention propose un ensemble lumineux d'un véhicule, ledit ensemble lumineux comprenant :
- un dispositif lumineux primaire comprenant un module lumineux primaire disposé dans un boîtier primaire,
- un dispositif lumineux secondaire comprenant un module lumineux secondaire disposé dans un boîtier secondaire,
- une pièce primaire comprenant une première partie et une deuxième partie, ladite deuxième partie étant transparente,
- une pièce secondaire comprenant une première partie et une partie, ladite deuxième partie étant transparente,
- un logo,
- les caractéristiques de la partie caractérisante de la revendication 1.

Selon des modes de réalisation non limitatifs, ledit ensemble lumineux peut comporter en outre une ou plusieurs caractéristiques supplémentaires prises seules ou selon toutes les combinaisons techniquement possibles, parmi les suivantes.

Selon un mode de réalisation non limitatif:
- la première partie de la pièce primaire est opaque, semi-opaque ou transparente,
- la première partie de la pièce secondaire est opaque, semi-opaque ou transparente.

Selon un mode de réalisation non limitatif, ledit dispositif d'indexage est une partie mâle configurée pour s'insère dans une partie femelle, ou inversement.

Selon un mode de réalisation non limitatif, la partie femelle est un puits fermé, et la partie mâle est un plot.

Selon un mode de réalisation non limitatif, la première partie et la deuxième partie sont surmoulées. Elles sont surmoulées par bi-injection.

Selon un mode de réalisation non limitatif, ledit ensemble lumineux comprend en outre un masque de style primaire et un masque de style secondaire configurés pour être assemblés respectivement sur ledit module lumineux primaire et sur ledit module lumineux secondaire

Selon un mode de réalisation non limitatif, ledit ensemble lumineux comprend en outre une pièce de style primaire et une pièce de style secondaire configurées pour être accrochées respectivement sur ladite pièce primaire et sur ladite pièce secondaire.

Selon un mode de réalisation non limitatif, ledit ensemble lumineux comprend en outre un dispositif d'indexage sur la carrosserie du véhicule.

Selon un mode de réalisation non limitatif, une desdites pièce primaire ou pièce secondaire comprend ladite surface de pose dudit logo.

Selon un mode de réalisation non limitatif, ladite surface de pose comprend ledit dispositif d'indexage sur la carrosserie du véhicule.

Selon un mode de réalisation non limitatif, ledit ensemble lumineux comprend en outre une pièce de structure centrale comprenant ladite surface de pose dudit logo

Selon un mode de réalisation non limitatif, ladite pièce de structure centrale comprend ledit dispositif d'indexage sur la carrosserie du véhicule.

Selon un mode de réalisation non limitatif, ledit dispositif lumineux primaire et ledit dispositif lumineux secondaire sont des projecteurs avant de véhicule ou des feux arrière de véhicule.

L'invention et ses différentes applications seront mieux comprises à la lecture de la description qui suit et à l'examen des figures qui l'accompagnent :
[Fig. 1] est une vue en perspective d'un ensemble lumineux d'un véhicule, ledit ensemble lumineux comprenant un premier dispositif lumineux avec un module primaire, un second dispositif lumineux avec un module secondaire, un bandeau formé par une pièce primaire et une pièce secondaire, un logo, et une surface de pose du logo, selon un mode de réalisation non limitatif de l'invention,
[Fig. 2a] illustre un schéma dudit ensemble lumineux de la figure 1, selon un premier mode de réalisation non limitatif,
[Fig. 2b] illustre un schéma dudit ensemble lumineux de la figure 1, selon un deuxième mode de réalisation non limitatif, certaines caractéristiques de l'invention telles que le recouvrement des pièces primaire et secondaire et le dispositif de fixation de la surface de pose n'étant pas illustrées dans ce schéma,
[Fig. 3] est une vue éclatée dudit ensemble lumineux de la figure 2a, selon un mode de réalisation non limitatif,
[Fig. 4] illustre ladite pièce primaire et ladite une pièce secondaire dudit ensemble lumineux de la figure 2a, selon un mode de réalisation non limitatif,
[Fig. 5] est une vue zoomée de ladite pièce secondaire de la figure 4, selon un mode de réalisation non limitatif,
[Fig. 6] illustre un dispositif de fixation d'un support de logo sur la pièce secondaire des figures 2a et 2b, selon un mode de réalisation non limitatif,
[Fig. 7] illustre un dispositif d'indexage de la pièce primaire des figures 2a et 2b par rapport à la pièce secondaire des figures 2a et 2b, selon un mode de réalisation non limitatif,
[Fig. 8] illustre la pièce primaire de la figure 4, le logo dudit ensemble lumineux des figures 2a et 3, la surface de pose du logo faisant partie de ladite pièce primaire, selon un premier mode de réalisation non limitatif,
[Fig. 9] illustre une face arrière du logo des figures dudit ensemble lumineux des figures 2a et 2b, selon un mode de réalisation non limitatif,
[Fig. 10] illustre la surface de pose dudit l'ensemble lumineux des figures 2a et 2b, selon un mode de réalisation non limitatif,
[Fig. 11] illustre le logo de la figure 9 positionné sur la surface de pose de la figure 10, selon un mode de réalisation non limitatif,
[Fig. 12] illustre une vue en coupe de l'ensemble lumineux de la figure 2a, selon un mode de réalisation non limitatif,
[Fig. 13] est une vue zoomée d'un boîtier primaire configuré pour accueillir le module lumineux primaire dudit ensemble lumineux des figures 2a ou 2b, et d'un boîtier secondaire configuré pour accueillir le module lumineux secondaire dudit ensemble lumineux des figures 3 ou 12, selon un mode de réalisation non limitatif,
[Fig. 14] est une vue éclatée dudit ensemble lumineux de la figure 2b, selon un deuxième mode de réalisation non limitatif,
[Fig. 15] illustre ladite pièce primaire et ladite une pièce secondaire dudit ensemble lumineux de la figure 2b, selon un mode de réalisation non limitatif,
[Fig. 16] est une vue zoomée de ladite pièce secondaire de la figure 15, selon un mode de réalisation non limitatif.

Les éléments identiques, par structure ou par fonction, apparaissant sur différentes figures conservent, sauf précision contraire, les mêmes références.

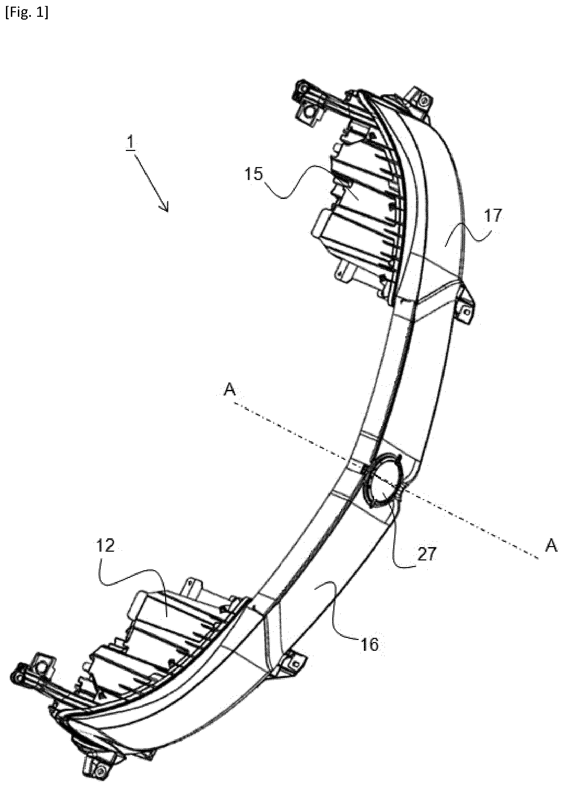

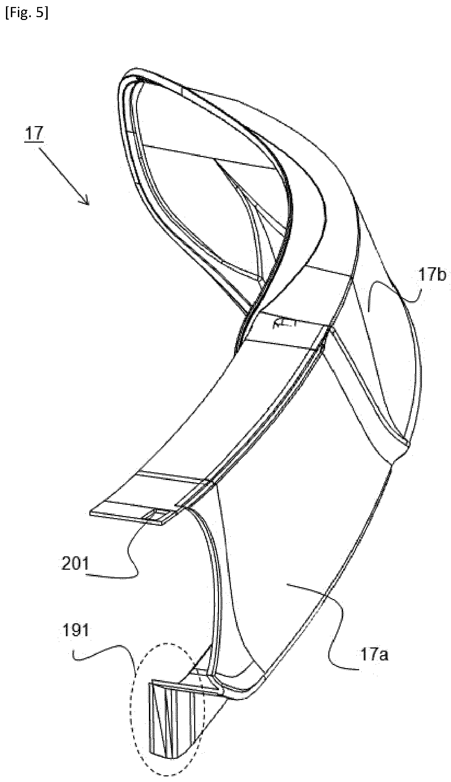

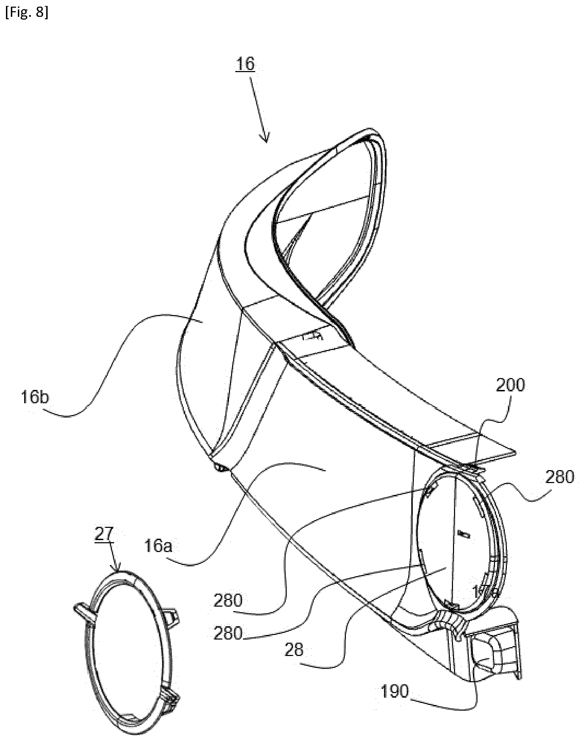

L'ensemble lumineux 1 d'un véhicule selon l'invention est décrit en référence aux figures 1 à 16. Dans un mode de réalisation non limitatif, le véhicule est un véhicule automobile. Par véhicule automobile, on entend tout type de véhicule motorisé. Ce mode de réalisation est pris comme exemple non limitatif dans la suite de la description. Dans la suite de la description, le véhicule est ainsi autrement appelé véhicule automobile.

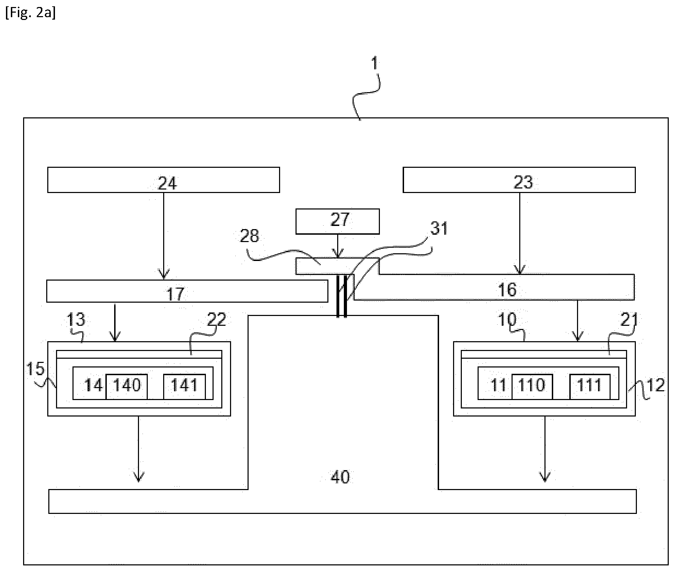

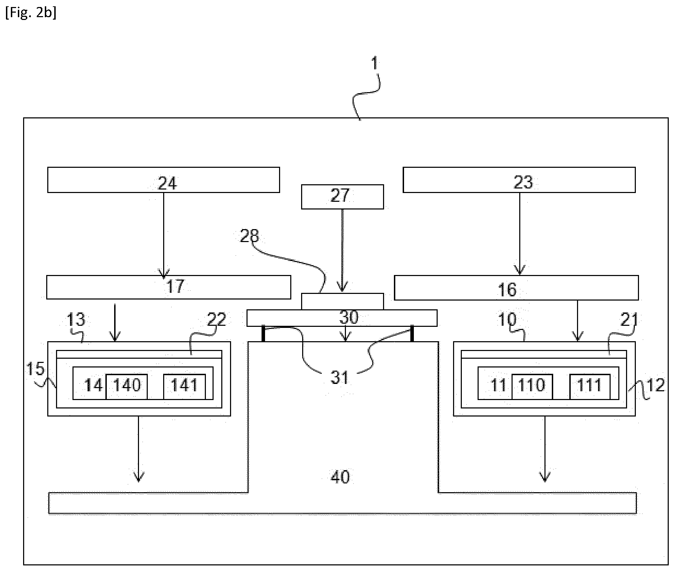

Tel qu'illustré sur les figures 2a et 2b ou 3 et 12, l'ensemble lumineux 1 d'un véhicule comprend :
- un dispositif lumineux primaire 10 comprenant un module lumineux primaire 11 (illustré sur les figures 2a et 2b) disposé dans un boîtier primaire 12,
- un dispositif lumineux secondaire 13 comprenant un module lumineux secondaire 14 (illustré sur les figures 2a et 2b) disposé dans un boîtier secondaire 15,
- une pièce primaire 16,
- une pièce secondaire 17,
- un logo 27, et
- une surface de pose 28 dudit logo 27.

Dans un mode de réalisation non limitatif, le dispositif lumineux primaire 10 et le dispositif lumineux secondaire 13 sont des projecteurs avant du véhicule. Dans un exemple non limitatif illustré, le dispositif lumineux primaire 10 est le projecteur avant droit du véhicule, et le dispositif lumineux secondaire 13 est le projecteur avant gauche du véhicule. Dans un autre mode de réalisation non limitatif, le dispositif lumineux primaire 10 et le dispositif lumineux secondaire 13 sont des feux arrière du véhicule. Dans un exemple non limitatif non illustré, le dispositif lumineux primaire 10 est le feu arrière droit du véhicule, et le dispositif lumineux secondaire 13 est le feu arrière gauche du véhicule.

Tel qu'illustré sur les figures 2a et 2b, le module lumineux primaire 11 et le module lumineux secondaire 14 comprennent en outre chacun au moins une source lumineuse référencée respectivement 110, 140 sur les figures 2a et 2b. Le module lumineux primaire 11 et le module lumineux secondaire 14 génèrent chacun un faisceau lumineux (on illustré) permettant de réaliser une fonction lumineuse correspondante au dispositif lumineux 10 ou 13 (de projecteur ou de feu arrière). Dans un mode de réalisation non limitatif, la source lumineuse 110, 140 est une source lumineuse à semi-conducteur. Dans un mode de réalisation non limitatif, ladite source lumineuse à semi-conducteur fait partie d'une diode électroluminescente. Par diode électroluminescente, on entend tout type de diodes électroluminescentes, que ce soit dans des exemples non limitatifs des LED (« Light Emitting Diode »), des OLED (« organic LED »), des AMOLED (Active-Matrix-Organic LED), ou encore des FOLED (Flexible OLED).

Tel qu'illustré sur les figures 2a et 2b, dans un mode de réalisation non limitatif, le module lumineux primaire 11 et le module lumineux secondaire 14 comprennent en outre chacun un module optique référencé respectivement 111, 141 tels que dans des exemples non limitatifs un réflecteur, une lentille ou un guide de lumière. Il peut comprendre plusieurs réflecteurs, ou lentilles, ou guides de lumière.

Tel qu'illustré sur les figures 2a et 2b ou 3 et 12, dans un mode de réalisation non limitatif, l'élément lumineux 1 comprend en outre un masque de style primaire 21 et un masque de style secondaire 22 configurés pour être assemblés respectivement sur le module lumineux primaire 11 et sur le module lumineux secondaire 14. Ils sont disposés entre l'ensemble module lumineux primaire 11 - module lumineux secondaire 14 et l'ensemble pièce primaire 16 - pièce secondaire 17. Dans un mode de réalisation non limitatif illustré, le masque de style primaire 21 fait partie du dispositif lumineux primaire 10. Le masque de style secondaire 22 fait partie du dispositif lumineux secondaire 13.

Tel qu'illustré sur les figures 2a et 2b ou 3 et 12, dans un mode de réalisation non limitatif, l'élément lumineux 1 comprend en outre une comprend une pièce de style primaire 23 et une pièce de style secondaire 24 configurées pour être accrochées respectivement sur ladite pièce primaire 16 et sur ladite pièce secondaire 17. Dans un exemple non limitatif, la pièce de style primaire 23 et la pièce de style secondaire 24 sont chromées. La pièce de style primaire 23 et la pièce de style secondaire 24 comprennent respectivement une série de pattes de fixation 230 et 240 pour les fixer respectivement sur ladite pièce primaire 16 et sur ladite pièce secondaire 17.

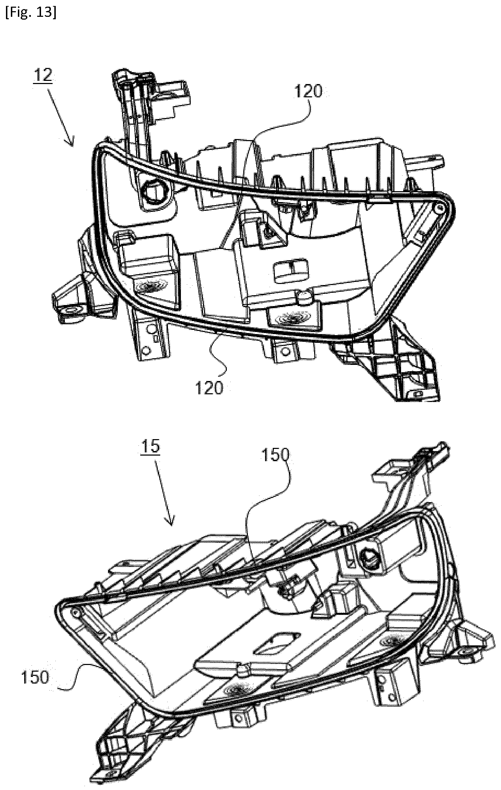

Tel qu'illustré sur la figure 13, le boîtier primaire 12 comprend une gorge de collage 120 pour coller tout ou partie de la pièce primaire 16. La gorge de collage 120 est configurée pour recevoir de la colle. La colle va réticuler pendant le passage dans un four dudit ensemble lumineux 1. Ainsi, dans un mode de réalisation non limitatif, la première partie 16a et la deuxième partie 16b de la pièce primaire sont collées sur le boîtier primaire 12 via la colle logée dans la gorge de collage 120. Cela permet d'avoir une bonne étanchéité.

Tel qu'illustré sur la figure 13, le boîtier secondaire 15 comprend une gorge de collage 150 pour coller tout ou partie de la pièce secondaire 17. La gorge de collage 150 est configurée pour recevoir de la colle. La colle va réticuler pendant le passage dans un four. Ainsi, dans un mode de réalisation non limitatif, la première partie 17a et la deuxième partie 17b de la pièce primaire sont collées sur le boîtier secondaire 15 via la colle logée dans la gorge de collage 150. Cela permet d'avoir une bonne étanchéité.

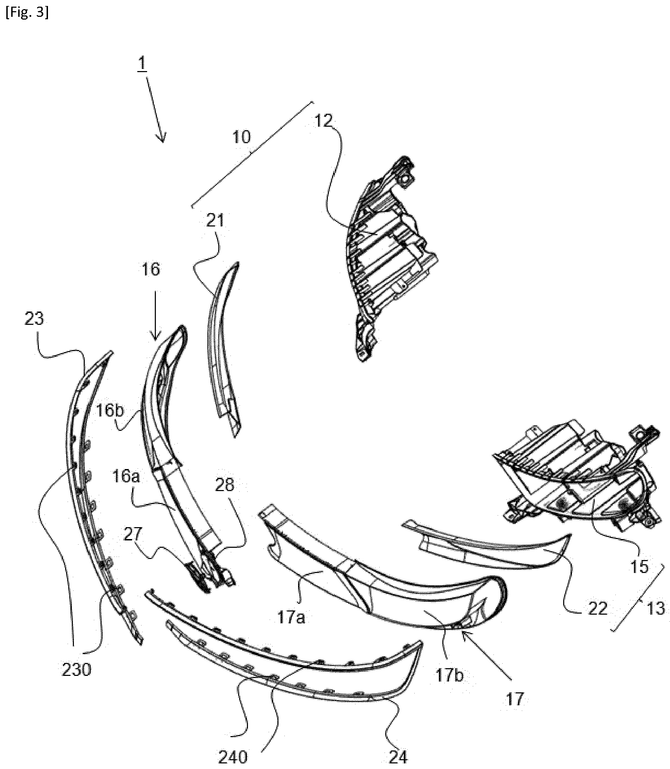

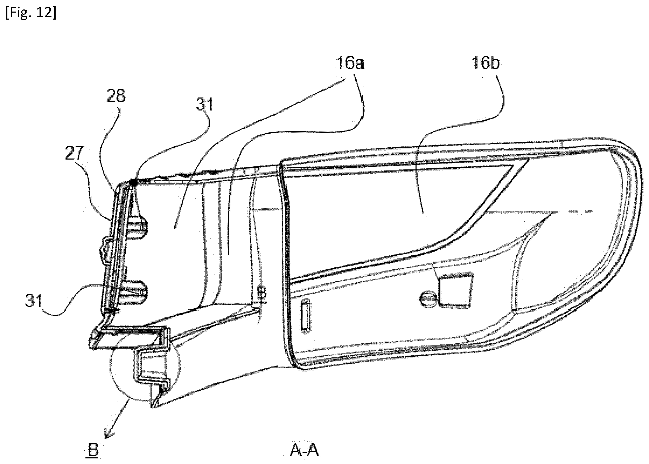

Tel qu'illustré sur les figures 3 et 12 par exemple, dans un mode de réalisation non limitatif, la pièce primaire 16 et la pièce secondaire 17 comprennent respectivement une première partie 16a, 17a et une deuxième partie 16b, 17b.

Dans un mode de réalisation non limitatif, la première partie 16a et la deuxième partie 16b de la pièce primaire 16 sont surmoulées. Dans un mode de réalisation non limitatif, la première partie 17a et la deuxième partie 17b de la pièce secondaire 17 sont surmoulées. La première partie 16a et la deuxième partie 16b de la pièce primaire 16 sont surmoulées par bi-injection. Il en est de même pour La première partie 17a et la deuxième partie 17b de la pièce secondaire 17. Cela permet d'obtenir une seule pièce, à savoir la pièce primaire 16 ou la pièce secondaire 17, et de n'utiliser qu'un seule moule pour réaliser ladite pièce. Par ailleurs, la fabrication est plus rapide et moins coûteuse que s'il fallait assembler les deux parties 16a, 16b de la pièce primaire 16, ou 17a, 17b de la pièce secondaire 17.

Dans un mode de réalisation non limitatif, la première partie 16a de la pièce primaire 16 est opaque, semi-opaque (dans un exemple non limitatif fumée) ou transparente, et la deuxième partie 16b est transparente. Dans un mode de réalisation non limitatif, la première partie 17a de la pièce secondaire 17 est opaque, semi-opaque (dans un exemple non limitatif fumée) ou transparente, et la deuxième partie 17b est transparente.

Dans un exemple non limitatif, la première partie 16a et la première partie 17a sont de couleur noire. Dans un mode de réalisation non limitatif, la pièce primaire 16 et la pièce secondaire 17 sont réalisées en PC (polycarbonate) ou en PP (polypropylène). A savoir, la première partie 16a et la deuxième partie 16b sont réalisées en PC, ou en PP, et la première partie 17a et la deuxième partie 17b sont réalisées en PC, ou en PP.

Tel qu'illustré sur les figures 3 et 12, dans un mode de réalisation non limitatif, la pièce primaire 16 est configurée pour être disposée en regard du dispositif lumineux primaire 10, à savoir en face du projecteur avant droit dans l'exemple non limitatif illustré ; et la pièce secondaire 17 est configurée pour être disposée en regard du dispositif lumineux secondaire 13, à savoir en face du projecteur avant gauche dans l'exemple non limitatif illustré. En particulier, leur deuxième partie 16b, 17b qui est transparente est disposée en face respectivement du dispositif lumineux primaire 10 et du dispositif lumineux secondaire 13 de sorte à laisser passer respectivement le faisceau lumineux généré par respectivement le module lumineux primaire 11 et le module lumineux secondaire 14.

La pièce primaire 16 et la pièce secondaire 17 sont configurées pour former un bandeau qui recouvre le dispositif lumineux primaire 10 et le dispositif lumineux secondaire 14 avec un logo 27 au centre dudit bandeau de sorte à obtenir un aspect visuel d'une seule pièce.

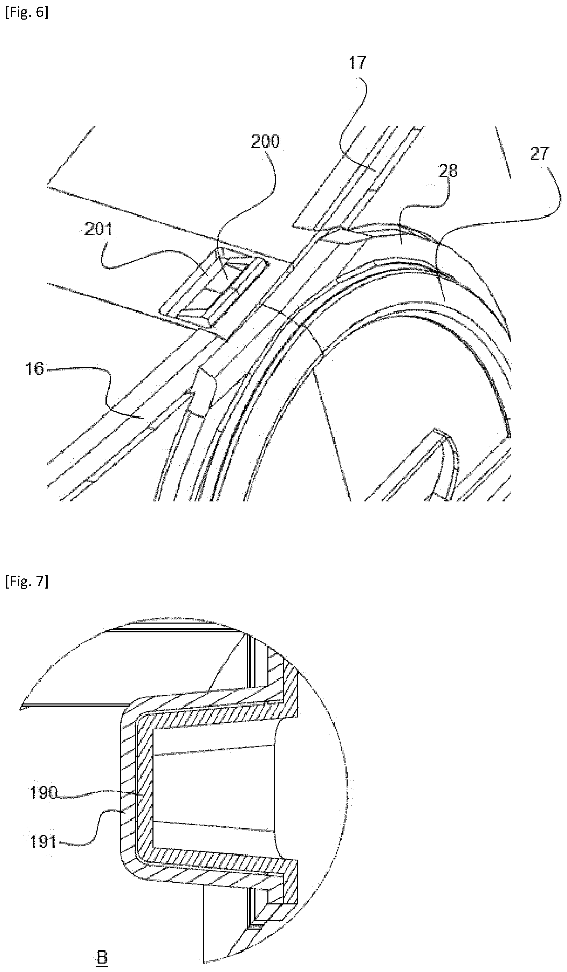

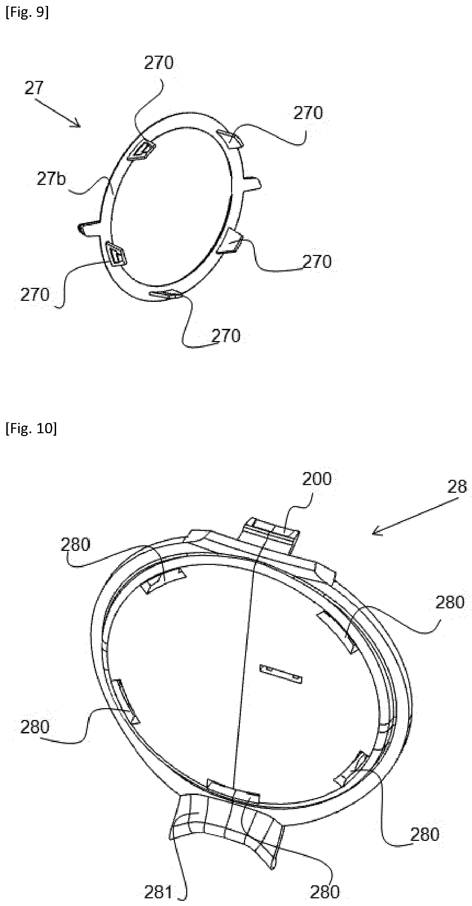

Tel qu'illustré sur la figure 10, la surface de pose 28 du logo 27 comprend un dispositif de fixation 200 sur l'une desdites pièce primaire 16 ou pièce secondaire 17. La surface de pose 28 du logo 27 comprend un dispositif de fixation 200 sur la pièce secondaire 17. Dans un exemple non limitatif, le dispositif de fixation 200 est une patte de fixation configurée pour s'insérer dans une fente 201 de la pièce secondaire 17 tel qu'illustré sur la figure 6. Ainsi, la pièce secondaire 17 comprend une contrepartie 201 du dispositif de fixation 200. La pièce primaire 16 et la pièce secondaire 17 sont ainsi clipsées entre elles.

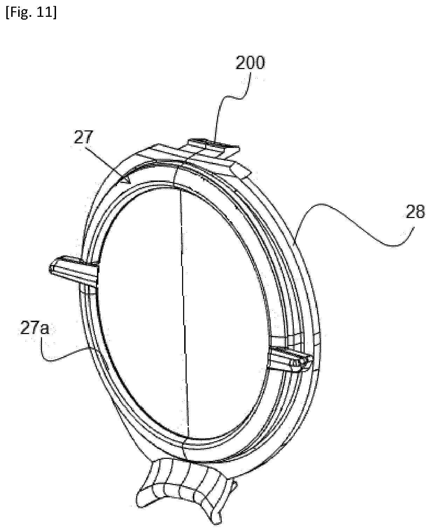

Tel qu'illustré sur la figure 10 la surface de pose 28 comprend une ou plusieurs fentes 280 pour recevoir des pattes de fixation 270 du logo 27 pour clipper le logo 27 dessus. Dans l'exemple non limitatif illustré il y a cinq fentes. Tel qu'illustré sur la figure 9, le logo 27 comprend sur sa face arrière 27b lesdites pattes de fixation 270, à savoir cinq dans l'exemple non limitatif illustré. Le logo 27 est ainsi fixé sur la surface de pose 28 au moyen desdites pattes de fixation 270. La figure 11 illustre la face avant 27a du logo 27, ce dernier étant positionné sur la surface de pose 28. Dans un mode de réalisation non limitatif, la surface de pose 28 a une forme relativement similaire au logo 27. Dans l'exemple non limitatif, le logo 27 a une forme circulaire. La surface de pose 28 a une forme circulaire également.

La pièce primaire 16 comprend un dispositif d'indexage 190 sur la pièce secondaire 17. Le dispositif d'indexage 190 est configuré pour positionner la pièce primaire 16 par rapport à la pièce secondaire 17.

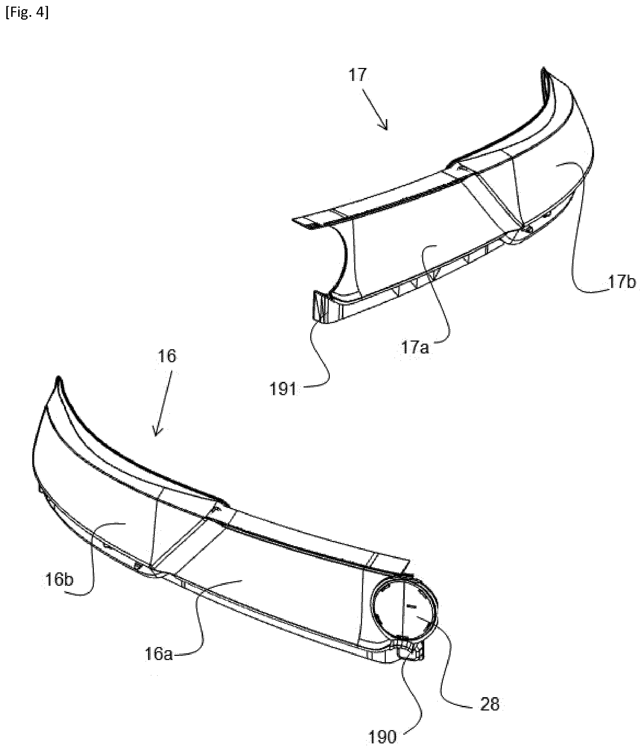

Tel qu'illustré sur les figures 4, 7, 8 et 15, dans un mode de réalisation non limitatif, la pièce primaire 16 comprend un dispositif d'indexage 190 sur ladite pièce secondaire 17. De son côté, tel qu'illustré sur les figures 4, 5 et 7, 15 et 16, la pièce secondaire 17 comprend une contrepartie 191 du dispositif d'indexage 190. Dans une variante de réalisation non limitative, c'est la première partie 17a qui comprend cette contrepartie 191. Tel qu'illustré sur la figure 7, dans un mode de réalisation non limitatif, le dispositif d'indexage 190 est une partie mâle configurée pour s'insérer dans une partie femelle 191, ou inversement. Dans un mode de réalisation non limitatif, la partie femelle 191 est un puits fermé, et la partie mâle 190 est un plot. Dans l'exemple non limitatif illustré sur la figure 7, la partie mâle 190 fait partie de la pièce primaire 16, et la partie femelle 191 fait partie de la pièce secondaire 17.

Dans un mode de réalisation non limitatif, le dispositif d'indexage 190 se situe à une extrémité de la pièce primaire 16. Dans l'exemple non limitatif illustré, il se situe à l'extrémité de la première partie 16a. Dans l'exemple non limitatif illustré, le dispositif d'indexage 190 se situe en partie basse de la pièce primaire 16, tandis que le dispositif de fixation 200 se situe en partie haute de la pièce primaire 16. Ainsi, l'indexage se fait par le bas, et la fixation par le haut. Ainsi, on positionne et ajuste la pièce primaire 16 par rapport à la pièce secondaire 17 par le bas, puis on vient la fixer sur la pièce secondaire 17 par le haut via le dispositif de fixation 200.

Tel qu'illustré sur les figures 2a, 2b et 12, dans un mode de réalisation non limitatif, ledit ensemble lumineux 1 comprend en outre un dispositif d'indexage 31 sur la carrosserie 40 du véhicule. Dans une variante de réalisation non limitative illustrée sur les figures, le dispositif d'indexage 31 comprend deux pions.

L'ensemble lumineux 1 est décrit ci-après selon un premier mode de réalisation non limitatif illustré sur les figures 2a à 5, et 8.

Selon ce premier mode de réalisation non limitatif, la pièce primaire 16 et la pièce secondaire 17 sont assemblées directement ensemble pour former le bandeau de sorte à avoir un aspect visuel d'une seule pièce, le logo 27 étant disposé au centre dudit bandeau. Par directement, on entend qu'il n'y a pas de pièce intermédiaire pour les assembler.

Selon ce premier mode de réalisation non limitatif, une desdites pièce primaire 16 ou pièce secondaire 17 comprend la surface de pose 28 dudit logo 27. Dans ce premier mode de réalisation non limitatif, le logo 27 est ainsi intégré dans une des deux pièces. La pièce primaire 16 et la pièce secondaire 17 sont asymétriques puisque l'une d'elle comprend la surface de pose 28 du logo 27. Dans une variante de réalisation non limitative illustrée sur les figures 3, 4 et 8, la pièce primaire 16 comprend ladite surface de pose 28. Ainsi, puisque la surface de pose 28 comprend le dispositif de fixation 200 sur la pièce secondaire 17, la pièce primaire 16 est directement fixée à la pièce secondaire 17 via ladite surface de pose 28.

Selon ce premier mode de réalisation non limitatif, dans un mode de réalisation non limitatif illustré sur la figure 2a, c'est la surface de pose 28 qui comprend le dispositif d'indexage 31 sur la carrosserie 40 du véhicule. Tel qu'illustré sur la figure 2a, le dispositif d'indexage 31 permet de positionner l'ensemble pièce primaire 16 (dans laquelle est intégrée la surface de pose 28) - pièce secondaire 17 (qui est fixée à la pièce primaire 16) par rapport à la carrosserie 40 du véhicule.

L'ensemble lumineux 1 est décrit ci-après selon un deuxième mode de réalisation non limitatif illustré sur les figures 2b, 14 à 16.

Selon ce deuxième mode de réalisation non limitatif, la pièce primaire 16 et la pièce secondaire 17 ne sont pas assemblées directement ensemble pour former un bandeau, mais sont assemblées ensemble via une pièce de structure centrale 30.

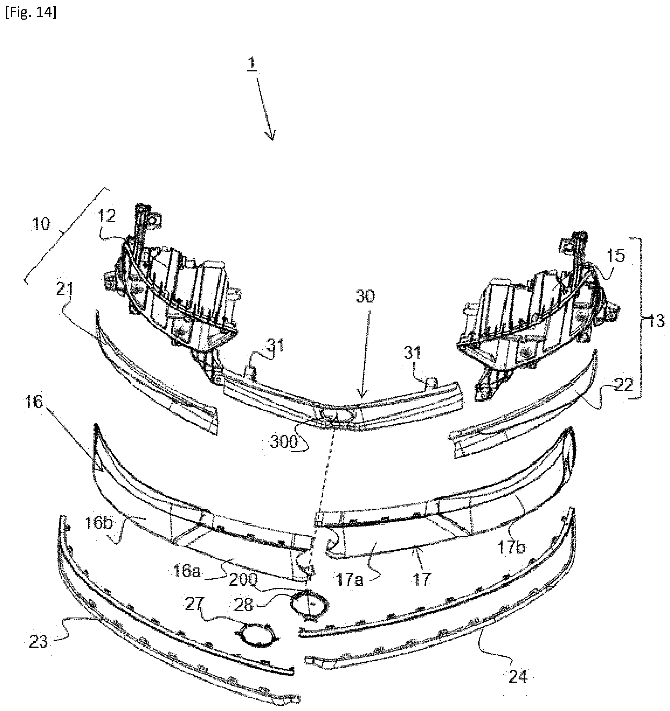

Ainsi, selon ce deuxième mode de réalisation non limitatif, tel qu'illustré sur la figure 14 et schématiquement sur la figure 2b, l'ensemble lumineux 1 comprend une pièce de structure centrale 30 comprenant ladite surface de pose 28 dudit logo 27. La surface de pose 28 est ainsi intégrée dans une la structure centrale 30. Le logo 27 est ainsi séparé de la pièce primaire 16 et de la pièce secondaire 17. Il n'est pas intégré dans l'une des deux pièces. La pièce primaire 16 et la pièce secondaire 17 sont relativement symétriques. Comme la surface de pose 28 comprend le dispositif de fixation 200 sur la pièce secondaire 17, la pièce de structure centrale 30 est ainsi fixée à la pièce secondaire 17 via ladite surface de pose 28.

Comme cela est illustré sur la figure 14, selon le deuxième mode de réalisation de l'invention, la surface de pose (28) est séparée de la pièce de structure centrale (30) à laquelle elle s'intègre. Elle s'intègre dans un emplacement 300 de la pièce de structure centrale 30 dédiée à cet effet.

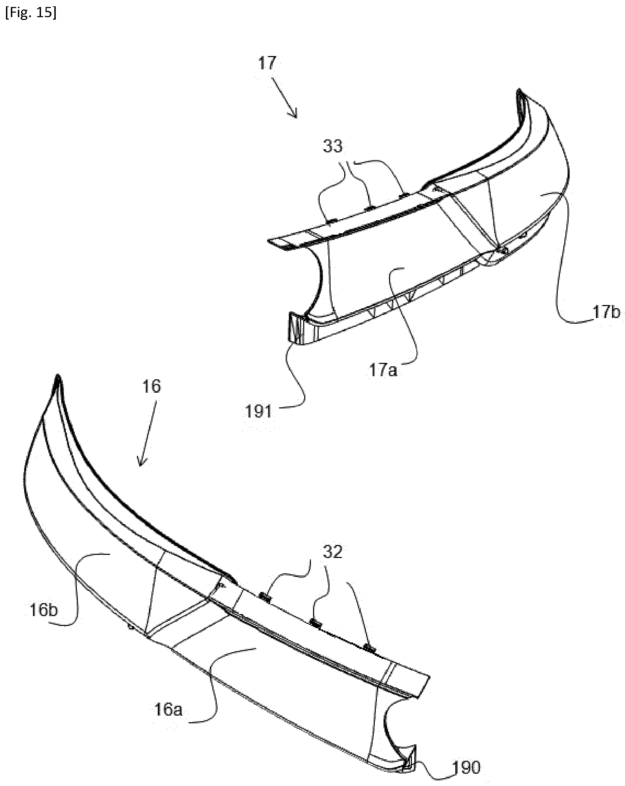

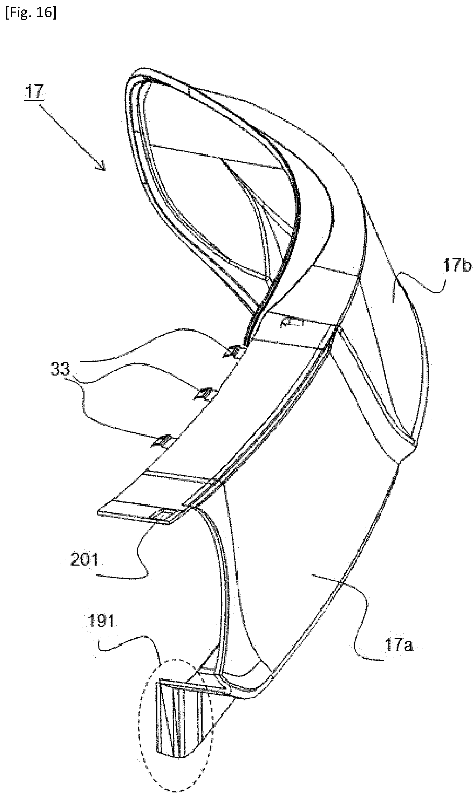

Dans un mode de réalisation non limitatif illustré sur les figures 15 et 16, la pièce primaire 16 et la pièce secondaire 17 comprennent en outre chacune respectivement un dispositif de fixation 32, 33 sur la pièce de structure centrale 30. Dans un mode de réalisation non limitatif illustré sur les figures 15 et 16, le dispositif de fixation 32, 33 respectivement de la pièce primaire 16 et de la pièce secondaire 17 comprend au moins une patte de fixation. Dans l'exemple non limitatif illustré, il comprend trois pattes de fixation qui vont s'insérer dans une fente (non illustrée) de la pièce de structure centrale 30. La pièce primaire 16 et la pièce secondaire 17 sont ainsi clipsées sur la pièce de structure centrale 30.

Lorsqu'elles sont assemblées sur la pièce de structure centrale 30, la pièce primaire 16 et la pièce secondaire 17 forment un bandeau avec un logo 27 au centre dudit bandeau de sorte à avoir un aspect visuel d'une seule pièce.

Selon ce deuxième mode de réalisation non limitatif, dans un mode de réalisation non limitatif illustré sur la figure 14 c'est la pièce de structure centrale 30 qui comprend le dispositif d'indexage 31 sur la carrosserie 40 du véhicule. Tel qu'illustré sur la figure 2b, le dispositif d'indexage 31 permet de positionner l'ensemble pièce primaire 16 (qui est fixée à la pièce de structure centrale 30) - pièce de structure centrale 30 - pièce secondaire 17 (qui est fixée à la pièce de structure centrale 30) par rapport à la carrosserie 40 du véhicule.

Bien entendu la description de l'invention n'est pas limitée aux modes de réalisation décrits ci-dessus et au domaine décrit ci-dessus. Ainsi, dans un autre mode de réalisation non limitatif, une seule de la première partie 16a ou de la deuxième partie 16b de la pièce primaire 16 peut être collée sur le boîtier primaire 12. De même, une seule de la première partie 17a ou de la deuxième partie 17b de la pièce secondaire 17 peut être collée sur le boîtier secondaire 15. Ainsi, dans un autre mode de réalisation non limitatif, la pièce primaire 16 et la pièce secondaire 17 sont réalisés en PMMA (polyméthacrylate de méthyle). Ainsi, dans un autre mode de réalisation non limitatif, les pattes de fixation du dispositif de fixation 32 sur la pièce de structure centrale 30 peuvent être remplacées par des vis de fixation. Il en est de même pour les pattes de fixation du dispositif de fixation 33 sur la pièce de structure centrale 30. D'autre part le terme logo doit être entendu dans une sens très large, c'est-à-dire comme une pièce additionnelle qui peut ou non représenté un signe distinctif représentatif d'une marque. Il pourrait s'agir également d'un cache positionné devant un capteur d'aide à la conduite.

Ainsi, l'invention décrite présente notamment les avantages suivants :
- elle permet par rapport à l'état de la technique antérieur de former un bandeau avec deux pièces au lieu de trois pièces de sorte à avoir un aspect visuel d'une seule pièce,
- elle permet d'assembler facilement les deux pièces grâce au dispositif d'indexage 190,
- elle permet d'assembler facilement les deux pièces grâce au dispositif d'indexage 190 ; il n'y a plus de problème d'ajustement en raison de jeux mécaniques,
- elle permet d'avoir un logo intégré dans le bandeau,
- elle permet d'avoir une bonne étanchéité du bandeau formé par la pièce primaire 16 et la pièce secondaire 17 avec le dispositif lumineux primaire 10 et le dispositif lumineux secondaire 13 ; ainsi il n'y a pas de risque qu'un fluide entre dans le dispositif lumineux primaire 10 et le dispositif lumineux secondaire 13.

## Revendications

1. Ensemble lumineux (1) d'un véhicule, ledit ensemble lumineux (1) comprenant :
- un dispositif lumineux primaire (10) comprenant un module lumineux primaire (11) disposé dans un boîtier primaire (12),
- un dispositif lumineux secondaire (13) comprenant un module lumineux secondaire (14) disposé dans un boîtier secondaire (15),
- une pièce primaire (16) comprenant une première partie (16a) et une deuxième partie (16b), ladite deuxième partie (16b) étant transparente et disposée en face du dispositif lumineux primaire (10),
- une pièce secondaire (17) comprenant une première partie (17a) et une partie (17b), ladite deuxième partie (17b) étant transparente et disposée en face du dispositif lumineux secondaire (13),
- un logo (27),
**caractérisé en ce que** :
- la pièce primaire (16) et la pièce secondaire (17) comprennent respectivement un dispositif d'indexage (190) et une contrepartie (191) du dispositif d'indexage (190) configurés pour positionner la pièce primaire (16) et la pièce secondaire (17) l'une par rapport à l'autre,
- l'une desdites pièce primaire (16) ou pièce secondaire (17) recouvrant partiellement l'autre desdites pièce primaire (16) ou pièce secondaire (17),
- ledit ensemble lumineux (1) comprenant en outre une surface de pose (28) dudit logo (27), la surface de pose (28) étant soit comprise dans la pièce primaire (16) soit réalisée sous la forme d'une pièce séparée destinée à être fixée à une pièce de structure centrale (30) optionnelle de l'ensemble lumineux (1), les pièces primaire (16) et secondaire (17) étant dans ce deuxième cas assemblées via ladite pièce de structure centrale (30) optionnelle,
la surface de pose (28) comprenant un dispositif de fixation (200) sur la pièce secondaire (17).

2. Ensemble lumineux (1) selon la revendication 1, selon lequel :
- la première partie (16a) de la pièce primaire (16) est opaque, semi-opaque ou transparente,
- la première partie (17a) de la pièce secondaire (17) est opaque, semi-opaque ou transparente.

3. Ensemble lumineux (1) selon l'une quelconque des revendications précédentes, selon lequel ledit dispositif d'indexage est soit une partie mâle (191) configurée pour s'insérer dans une partie femelle (190), soit une partie femelle (190) destinée à recevoir une partie mâle (191).

4. Ensemble lumineux (1) selon la revendication précédente, selon lequel la partie femelle (191) est un puits fermé, et la partie mâle (190) est un plot.

5. Ensemble lumineux (1) selon l'une quelconque des revendications précédentes, selon lequel la première partie (16a, 17a) et la deuxième partie (16b, 17b) sont surmoulées.

6. Ensemble lumineux (1) selon l'une quelconque des revendications précédentes, selon lequel ledit ensemble lumineux (1) comprend en outre un masque de style primaire (21) et un masque de style secondaire (22) configurés pour être assemblés respectivement sur ledit module lumineux primaire (11) et sur ledit module lumineux secondaire (14).

7. Ensemble lumineux (1) selon l'une quelconque des revendications précédentes, selon lequel ledit ensemble lumineux (1) comprend en outre une pièce de style primaire (23) et une pièce de style secondaire (24) configurées pour être accrochées respectivement sur ladite pièce primaire (16) et sur ladite pièce secondaire (17).

8. Ensemble lumineux (1) selon l'une quelconque des revendications précédentes, selon lequel ledit ensemble lumineux (1) comprend en outre un dispositif d'indexage (31) sur la carrosserie (40) du véhicule.

9. Ensemble lumineux (1) selon l'une quelconque des revendications précédentes, selon lequel une desdites pièce primaire (16) ou pièce secondaire (17) comprend ladite surface de pose (28) dudit logo (27).

10. Ensemble lumineux (1) selon la revendication 8 et la revendication 9, selon lequel ladite surface de pose (28) comprend ledit dispositif d'indexage (31) sur la carrosserie (40) du véhicule.

11. Ensemble lumineux (1) selon l'une quelconque des revendications précédentes 1 à 8, selon lequel ledit ensemble lumineux (1) comprend en outre une pièce de structure centrale (30) comprenant ladite surface de pose (28) dudit logo (27).

12. Ensemble lumineux (1) selon la revendication 8 et la revendication 11, selon lequel ladite pièce de structure centrale (30) comprend ledit dispositif d'indexage (31) sur la carrosserie (40) du véhicule.

13. Ensemble lumineux (1) d'un véhicule selon l'une quelconque des revendications précédentes, selon lequel ledit dispositif lumineux primaire (10) et ledit dispositif lumineux secondaire (13) sont des projecteurs avant de véhicule ou des feux arrière de véhicule.

## Patentansprüche

1. Leuchtanordnung (1) eines Fahrzeugs, wobei die Leuchtanordnung (1) umfasst:
- eine primäre Leuchtvorrichtung (10), die ein primäres Leuchtmodul (11) umfasst, das in einem primären Gehäuse (12) angeordnet ist, eine sekundäre Leuchtvorrichtung (13), die ein sekundäres Leuchtmodul (14) umfasst, das in einem sekundären Gehäuse (15) angeordnet ist, ein primäres Teil (16), das einen ersten Abschnitt (16a) und einen zweiten Abschnitt (16b) umfasst, wobei der zweite Abschnitt (16b) transparent und der primären Leuchtvorrichtung (10) gegenüberliegend angeordnet ist,
- ein sekundäres Teil (17), das einen ersten Abschnitt (17a) und einen Abschnitt (17b) umfasst, wobei der zweite Abschnitt (17b) transparent und der sekundären Leuchtvorrichtung (13) gegenüberliegend angeordnet ist,
- ein Logo (27),
**dadurch gekennzeichnet,**
- **dass**: das primäre Teil (16) und das sekundäre Teil (17) jeweils eine Indexierungsvorrichtung (190) und eine Gegenstück (191) der Indexierungsvorrichtung (190) umfassen, die dazu konfiguriert sind, das primäre Teil (16) und das sekundäre Teil (17) relativ zueinander zu positionieren,
- wobei eines der genannten primären Teile (16) oder sekundären Teile (17) das andere der genannten primären Teile (16) oder sekundären Teile (17) teilweise überdeckt,
- wobei die Leuchtanordnung (1) ferner eine Auflagefläche (28) des Logos (27) umfasst, wobei die Auflagefläche (28) entweder im primären Teil (16) enthalten ist oder in Form eines separaten Teils ausgeführt ist, das an einem optionalen zentralen Strukturteil (30) der Leuchtanordnung (1) befestigt werden soll, wobei das primäre Teil (16) und das sekundäre Teil (17) in diesem zweiten Fall über das optionale zentrale Strukturteil (30) zusammengebaut werden, wobei die Auflagefläche (28) eine Befestigungsvorrichtung (200) am sekundären Teil (17) umfasst.

2. Leuchtanordnung (1) nach Anspruch 1, wobei:
- der erste Abschnitt (16a) des primären Teils (16) opak, halbopak oder transparent ist,
- der erste Abschnitt (17a) des sekundären Teils (17) opak, halbopak oder transparent ist.

3. Leuchtanordnung (1) nach einem der vorhergehenden Ansprüche, wobei die Indexierungsvorrichtung entweder ein männlicher Teil (191) ist, der dazu konfiguriert ist, in einen weiblichen Teil (190) eingeführt zu werden, oder ein weiblicher Teil (190), der dazu bestimmt ist, einen männlichen Teil (191) aufzunehmen.

4. Leuchtanordnung (1) nach dem vorhergehenden Anspruch, wobei der weibliche Teil (191) eine geschlossene Vertiefung ist und der männliche Teil (190) ein Zapfen ist.

5. Leuchtanordnung (1) nach einem der vorhergehenden Ansprüche, wobei der erste Abschnitt (16a, 17a) und der zweite Abschnitt (16b, 17b) umspritzt sind.

6. Leuchtanordnung (1) nach einem der vorhergehenden Ansprüche, wobei die Leuchtanordnung (1) ferner eine primäre Stilmaske (21) und eine sekundäre Stilmaske (22) umfasst, die dazu konfiguriert sind, jeweils auf dem primären Leuchtmodul (11) und auf dem sekundären Leuchtmodul (14) montiert zu werden.

7. Leuchtanordnung (1) nach einem der vorhergehenden Ansprüche, wobei die Leuchtanordnung (1) ferner ein primäres Stilstück (23) und ein sekundäres Stilstück (24) umfasst, die dazu konfiguriert sind, jeweils an dem primären Teil (16) und an dem sekundären Teil (17) eingehängt zu werden.

8. Leuchtanordnung (1) nach einem der vorhergehenden Ansprüche, wobei die Leuchtanordnung (1) ferner eine Indexierungsvorrichtung (31) an der Karosserie (40) des Fahrzeugs umfasst.

9. Leuchtanordnung (1) nach einem der vorhergehenden Ansprüche, wobei eines der genannten primären Teile (16) oder sekundären Teile (17) die Auflagefläche (28) des Logos (27) umfasst.

10. Leuchtanordnung (1) nach Anspruch 8 und Anspruch 9, wobei die Auflagefläche (28) die Indexierungsvorrichtung (31) an der Karosserie (40) des Fahrzeugs umfasst.

11. Leuchtanordnung (1) nach einem der vorhergehenden Ansprüche 1 bis 8, wobei die Leuchtanordnung (1) ferner ein zentrales Strukturteil (30) umfasst, das die Auflagefläche (28) des Logos (27) umfasst.

12. Leuchtanordnung (1) nach Anspruch 8 und Anspruch 11, wobei das zentrale Strukturteil (30) die Indexierungsvorrichtung (31) an der Karosserie (40) des Fahrzeugs umfasst.

13. Leuchtanordnung (1) eines Fahrzeugs nach einem der vorhergehenden Ansprüche, wobei die primäre Leuchtvorrichtung (10) und die sekundäre Leuchtvorrichtung (13) Fahrzeugscheinwerfer oder Fahrzeugrückleuchten sind.

## Claims

1. A light assembly (1) of a vehicle, said light assembly (1) comprising:
- a primary light device (10) comprising a primary light module (11) arranged in a primary housing (12),
- a secondary light device (13) comprising a secondary light module (14) arranged in a secondary housing (15),
- a primary component (16) comprising a first part (16a) and a second part (16b), said second part (16b) being transparent and arranged facing the primary light device (10),
- a secondary component (17) comprising a first part (17a) and a part (17b ), said second part (17b) being transparent and arranged facing the secondary light device (13)
- a logo (27),
**characterized in that**:
- the primary component (16) and the secondary component (17) respectively comprises an indexing device (190) and a counterpart (191) of the indexing device (190) configured to position the primary component (16) and the secondary component (17) relative to one another,
- one of said primary component (16) or secondary component (17) partially covering the other of said primary component (16) or secondary component (17),
- said light assembly (1) further comprising a mounting surface (28) for said logo (27), the mounting surface (28) being either included in the primary part (16) or produced in the form of a separate part intended to be attached to an optional central structural part (30) of the light assembly (1), the primary (16) and secondary (17) parts being in this second case assembled via said optional central structural part (30), the mounting surface (28) comprises a fixing device (200) on the secondary component (17).

2. The light assembly (1) as claimed in claim 1, wherein:
- the first part (16a) of the primary component (16) is opaque, semi-opaque or transparent,
- the first part (17a) of the secondary component (17) is opaque, semi-opaque or transparent.

3. The light assembly (1) as claimed in any one of the preceding claims, wherein said indexing device is either a male part (191) configured to be inserted into a female part (190), or a female part (190) intended to receive a male part (191).

4. The light assembly (1) as claimed in the preceding claim, wherein wherein the female part (191) is a closed well, and the male part (190) is a stud.

5. The light assembly (1) as claimed in any one of the preceding claims, wherein the first part (16a, 17a) and the second part (16b, 17b) are overmolded.

6. The light assembly (1) as claimed in any one of the preceding claims, wherein said light assembly (1) further comprises a primary style mask (21) and a secondary style mask (22) configured to be assembled respectively on said primary light module (11) and on said secondary light module (14).

7. The light assembly (1) as claimed in any one of the preceding claims, wherein said light assembly (1) further comprises a primary style part (23) and a secondary style part (24) configured to be fastened respectively to said primary component (16) and to said secondary component (17).

8. The light assembly (1) as claimed in any one of the preceding claims, wherein said light assembly (1) further comprises an indexing device (31) on the body (40) of the vehicle.

9. The light assembly (1) as claimed in any one of the preceding claims, wherein one of said primary component (16) or secondary component (17) comprises said mounting surface (28) for said logo (27).

10. The light assembly (1) as claimed in claim 8 and claim 9, wherein said mounting surface (28) comprises said indexing device (31) on the body (40) of the vehicle.

11. The light assembly (1) as claimed in any one of the preceding claims 1 to 8, wherein said light assembly (1) further comprises a central structural part (30) comprising said mounting surface (28) for said logo (27).

12. The light assembly (1) as claimed in claim 8 and claim 11, wherein said central structural part (30) comprises said indexing device (31) on the body (40) of the vehicle.

13. The light assembly (1) of a vehicle as claimed in any one of the preceding claims, wherein said primary light device (10) and said secondary light device (13) are vehicle front headlights or vehicle taillights
